# DEMANDE DE BREVET EUROPEEN

(11) **EP 1 995 688 A1**
(43) Date de publication de la demande: **26.11.2008**
(21) Numéro de dépôt: 07301055.5
(22) Date de dépôt: 21.05.2007
(51) Int. Cl.: G06K 19/077, G06K 19/02

(54) **Procédé de réalisation d'un dispositif comportant une antenne de transpondeur et dispositif obtenu**

(71) Demandeur: GEMPLUS, 13420 Gémenos (FR)
(72) Inventeur: MARTINENT, Jean-François, 13090 AIX EN PROVENCE (FR); ROBLES, Laurence, 83640 Saint Zacharie (FR); ALLEYSSON, Blandine, 13470 CARNOUX (FR)

(57) **Abrégé**

Procédé de réalisation d'un dispositif comportant une antenne de transpondeur radiofréquence, ledit procédé comprenant une étape de réalisation de l'antenne avec deux portions terminales (15, 17) par une technique de couture ou broderie,

Le procédé se distingue en ce qu'il comprend une étape de fixation d'un matériau stabilisant et renforçant le substrat après réalisation de l'antenne et avant report d'un module.

L'invention concerne également le dispositif obtenu.

## Description

L'invention concerne le domaine des transpondeurs radiofréquences. En particulier, il concerne un procédé de réalisation d'un dispositif comportant une antenne de transpondeur filaire.

L'invention vise à être utilisée en particulier dans la fabrication d'un insert électronique radiofréquence de faible épaisseur et bas coût et présentant de bonnes propriétés de communication notamment de portée.
Un tel insert comporte au moins une antenne sur un substrat destinée à être connectée à un microcircuit; il est destiné notamment à être inséré dans un laminé de feuilles, une couverture de passeport électronique, une carte d'identité, tout produit doté d'une fonction de communication radiofréquence; et de fait son épaisseur doit être très faible.

Parmi les procédés de réalisation d'antenne filaire sur un substrat on connaît la technique de l'incrustation de fil par ultra-son sur substrat, mais cette technologie est relativement lente et onéreuse. Par exemple, dans le brevet EP 0880 754 B1, le fil d'antenne réalisé en fil incrusté dans une feuille polymère survole les plages de contact d'une puce déjà en place ou son emplacement correspondant dans une cavité réalisée avant l'antenne et une connexion est réalisée par soudure notamment thermo compression.

Ce procédé a l'inconvénient d'être lent et onéreux et pour une variante de mise un oeuvre, de nécessiter une cavité préalablement à la réalisation de l'antenne pour le maintien du microcircuit et/ou la compensation d'épaisseur du micro circuit

On connaît également des techniques de réalisation d'antenne par couture ou broderie, par la demande de brevet JP 2002 298110 A, dans lequel un module étant d'abord fixé sur un substrat, l'antenne est fixée ensuite par points de couture sur le substrat. Pour la connexion, le fil s'étend par dessus les plages et vient serrer par contact des plages de contact du module.

Dans le brevet EP 1328899 B1, l'antenne est réalisée à l'aide d'un fil métallique cousu sur une feuille et des pastilles de contact disposées préalablement sur la feuille sont reliées au fil d'antenne. Une puce est reportée sur le substrat et connecté notamment par une liaison par fil soudé "wire bonding" aux pastilles. Cette technique requiert un positionnement préalable contraignant des pastilles et d'enrober les connexions de la puce ultérieurement. La présence du module sur le substrat avant la réalisation de l'antenne, peut être un frein à la cadence de production de l'antenne en grande série.

L'invention vise notamment à résoudre les inconvénients précités de réalisation d'antenne filaire.

Elle a pour objectif un procédé de réalisation d'antenne filaire qui soit économique et de bonne performance radioélectrique et permette une faible épaisseur d'ensemble, le module électronique étant compris.
L'invention réside dans son concept tout d'abord à sélectionner la couture ou broderie et à utiliser un support extrêmement facile à broder ou à coudre avec un fil métallique pour atteindre des cadences élevées de production d'antennes;
Puis, de manière à pouvoir manipuler et indexer correctement le support au cours d'autres étapes nécessaires à la fabrication d'un insert électronique comprenant par exemple des opérations de réalisation de cavité, report, connexion - étapes classiques dans l'industrie de la carte à puce - on renforce le support pour avoir un support résultant renforcé présentant des caractéristiques de stabilité dimensionnelle au moins sensiblement comparables ou équivalentes à la stabilité d'une feuille de plastique, par exemple PVC d'environ 50 µm.
Puis en renforçant le support avec un matériau de renfort pour dans le cadre de réalisation.

A cet effet, l'invention a pour objet un procédé de réalisation d'un dispositif comportant une antenne de transpondeur radiofréquence, ledit procédé comprenant une étape de réalisation de l'antenne comportant deux portions terminales par une technique de couture ou broderie;
Le procédé se distingue en ce qu'il comprend une étape de fixation d'un matériau stabilisant et renforçant le substrat après réalisation de l'antenne et avant report d'un module.

Ainsi, l'invention permet d'une part d'optimiser la cadence de production d'antenne et d'autre part de préparer le support pour qu'il retrouve des propriétés de tenue mécanique classique lui permettant d'être utilisé dans des conditions opératoires classiques requises par les étapes ultérieures de réalisation d'insert électronique.

L'invention permet une souplesse de fabrication du dispositif dans la mesure où la réalisation d'antenne peut être réalisée en toute première étape puisque totalement découplée des autres étapes de fabrication du dispositif comprenant notamment l'étape de report préalable des plages de contact ou l'étape de réalisation d'une cavité préalable sous les portions d'antenne à connecter, etc.

En général dans l'art antérieur l'adjonction d'une feuille est réalisée dans le but de compenser une épaisseur de puce ou module reporté et connecté; Ou dans le but de mettre une couche de structure. Il comporte à cet effet une cavité préalable à l'adjonction d'une feuille de compensation du côté de l'antenne ou du côté du module. En outre, contrairement à l'invention, on utilisait généralement un support qui facilite des opérations ultérieures de report de module, d'usinage de cavité, de connexion, d'adjonction d'un film de compensation d'épaisseur de module.

Selon d'autres caractéristiques de mise en oeuvre, du procédé :
- le substrat comprend un tissu;
- le tissu a des fils de chaine et de trame en polyamide, polyester ou poly-coton composé de fils de 48 à 76 dtex et/ou épaisseur naturelle au repos entre 80 et 300µm ; Ce tissu est facile à broder avec un fil métallique à des cadences élevées.
- le procédé comprend après la réalisation de l'antenne, une étape de formation d'une cavité dans le substrat et feuille ou couche de renfort à proximité des portions terminales de connexion de l'antenne;
- le procédé comprend une étape selon laquelle on reporte des plages de contact associées à un microcircuit en regard de portions terminales de l'antenne, le microcircuit étant inséré au moins en partie dans la cavité et on connecte les plages aux plages de contact;
- le matériau stabilisant comprend un thermoplastique poreux.

L'invention a également pour objet un dispositif comportant une antenne de transpondeur radiofréquence avec deux portions terminales, réalisée par une technique de couture ou broderie, sur un substrat souple;
Le dispositif se distingue en ce qu'il comprend un matériau stabilisant renforçant le substrat et fixé sur une face du substrat opposée à celui portant les portions terminales.

Selon d'autres caractéristiques du dispositif:
- le substrat comprend un tissu; ce tissu a les propriétés visées précédemment;
- Le dispositif comprend une cavité (26) dans le substrat et feuille ou couche de renfort à proximité des portions terminales de connexion de l'antenne.
- des plages de contact sont associées à un microcircuit (20) et disposées en regard du substrat et de portions terminales de l'antenne reposant sur le substrat, tandis que le microcircuit est inséré au moins en partie dans la cavité (26) et connecté à l'antenne.

L'invention a également pour objet un produit électronique de communication radiofréquence, tel une carte à puce sans contact, un passeport comprenant le dispositif ci-dessus ou obtenu selon le procédé ci-dessus.

D'autres particularités et avantages de l'invention apparaîtront à la lecture de la description, qui suit, donnée à titre d'exemple illustratif et non limitatif, et faite en référence aux figures annexées pour lesquelles :
- la figure 1 illustre une vue schématique d'un transpondeur pouvant être obtenu selon un mode de mise en oeuvre du procédé de l'invention;
- la figure 2 illustre un détail de l'antenne de la figure 1 réalisée par broderie sur un substrat tissé;
- la figure 3 illustre une vue partielle en coupe du dispositif selon la coupe A-A de la figure 1 dans lequel la tenue du substrat est renforcé avec une feuille;
- la figure 4 illustre une vue en coupe d'un dispositif selon mode de réalisation préféré de l'invention;
- La figure 5 illustre une vue en coupe d'un dispositif conforme à la figure 3 connecté à un module selon un mode de réalisation possible;
- La figure 6 illustre une vue en coupe d'un dispositif conforme à la figure 4 connecté à un module selon un mode préféré de réalisation;
- la figure 7 illustre une étape de réalisation d'une pluralité d'antenne sur un substrat et de lamination d'une feuille de renfort sur le substrat;
- La figures 8 illustre une étape de connexion d'une plage de contact selon un mode préféré à l'aide d'un outil de soudure et une enclume;
- La figure 9 illustre les étapes du procédé selon un mode préféré de mise en oeuvre.

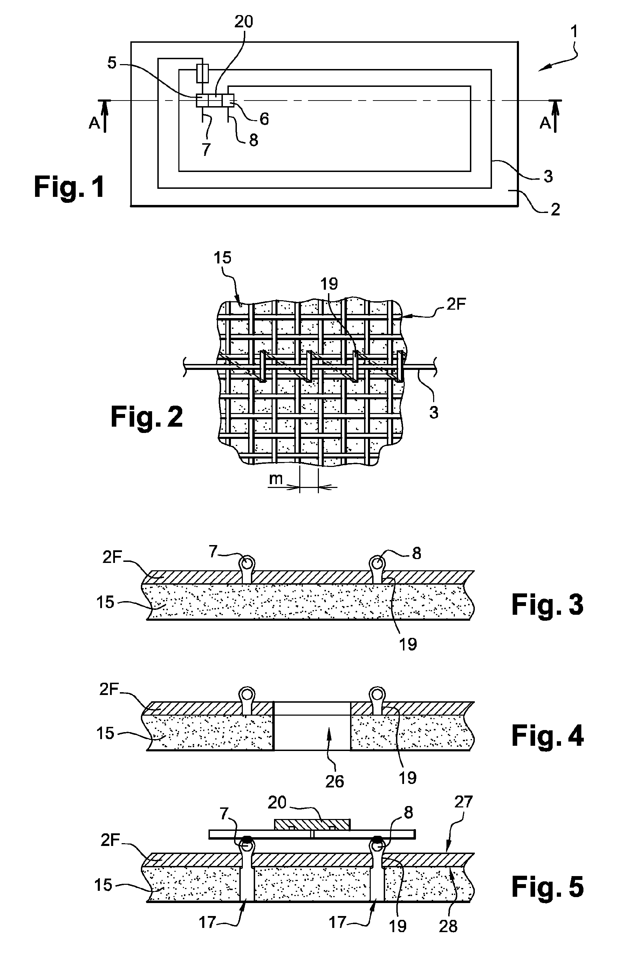

A La figure 1 selon un mode de réalisation de l'invention, le dispositif comporte une antenne 3 de transpondeur radiofréquence avec deux portions terminales 7, 8, l'antenne étant réalisée sur un substrat 2f par une technique filaire de type broderie ou couture ou équivalent. L'antenne est connectée à un module à des plages de contact d'un module.

Sur les figures 2 et 3, l'antenne 3 est fixée par broderie ou couture sur un substrat souple comportant un tissu 2f à l'aide d'un fil de broderie 19 isolant. La matière du substrat est telle qu'elle n'est pas un frein à la pénétration de l'aiguille de broderie ou couture dans la matière et donc un frein aux cadences de couture ou broderie; Le support est de préférence un tissu de faible tenue, ajouré; un support présentant un maillage lâche de fils ou de fibres tel que celui obtenu par tissage.
Le support est souple dans la mesure où il n'a pas de tenue, de rigidité comme tous les tissus fins. Le maillage (m) lâche entre des fils de chaine et/ou trame est par exemple compris entre 200 µm et 300 µm dans les deux sens) en polyamide de 48 dtex ou 80µm d'épaisseur au repos. En outre, il n'est pas stable dimensionnellement dans la mesure où il peut s'étirer normalement à la main notamment en diagonale par exemple au moins de 3 % à 20 %. Cette élongation est inférieure à 1 % dans le sens du défilement du substrat sens chaine ou trame en production.

Le dispositif conforme à l'invention comporte donc, dans un stade intermédiaire, l'antenne filaire sur un substrat souple en tissu ou équivalent apte à être brodé ou cousu facilement à cadence la plus élevée permise par un banc de couture ou de broderie comportant par exemple des dizaines de têtes de broderie ou couture.

Comme le maniement du tissu, support d'une antenne brodée, étant très délicat (matériau tissé souple et poreux) pour le stabiliser, le dispositif comprend un matériau de renfort 15 sous forme de feuille ou couche sur une face du substrat opposée à celle portant les portions terminales 7, 8; Un matériau stabilisant, tel qu'un matériau thermoplastique : polychlorure de vinyle (PVC), polycarbonate (PC), polyesters (ex : PET), PE chargé silice ; ou polyuréthane ; ou papier ; ou papier synthétique, renforçant le tissu est donc fixé sur le substrat.

A la figure 4, le dispositif comporte de préférence une cavité 26 permettant de loger un composant au moins en partie et de limiter ainsi l'épaisseur totale résultante. La cavité est avantageusement réalisée par usinage notamment poinçonnage en une seule opération dans les deux couches ou matériaux comprenant le substrat 2f et matériau additionnel 15.
Le cas échéant, si le tissu est très lâche et le matériau très malléable la cavité peut être réalisée par emboutissage en compressant la matière avec un outil ou en reportant directement le module.

Une découpe préalable dans un substrat non stable dimensionnellement serait difficile à positionner ou indexer.

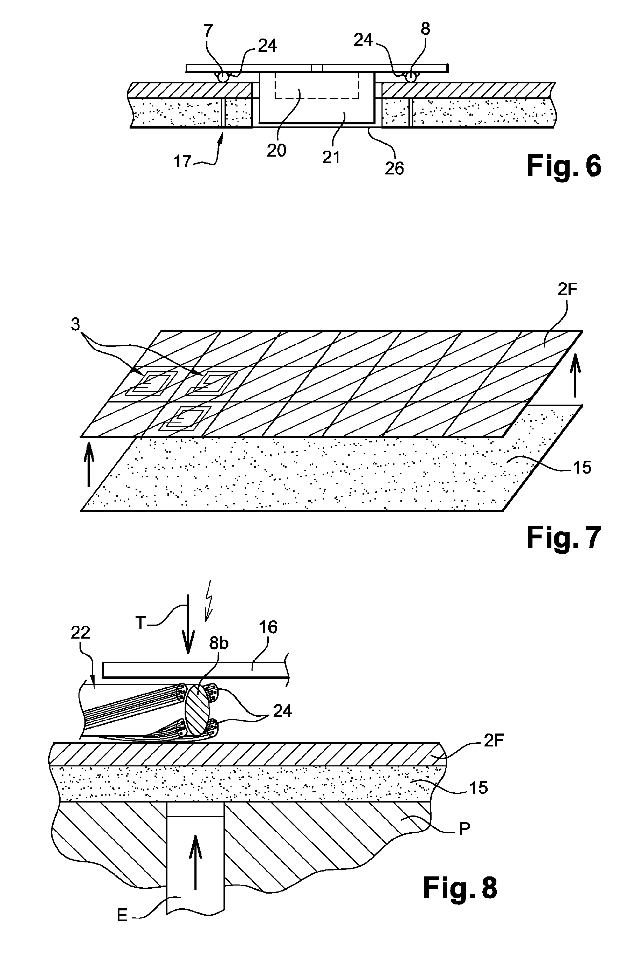

A la figure 5, le dispositif comprend un module connecté à l'antenne. Il peut comporter des perforations 17 éventuellement au moins partiellement refermées, résultant d'un procédé préféré de connexion décrit ultérieurement. A la figure 6, la puce 20 avec ou sans enrobage 21 est introduite au moins partiellement dans la cavité 26.

Dans ce mode de réalisation le dispositif comporte une connexion avec un fil d'antenne hybride 22 dans la mesure où le fil d'antenne 3 est associé à quatre fils non conducteurs 24; l'association peut cependant en compter au moins un fil non conducteur. Les fils non conducteur 24 sont de préférence thermo-fusibles ou thermoplastiques pour fondre sous l'effet de l'énergie thermique ou énergie des ultra-sons.

En référence aux figures 4, 6, 7, 8 10, on va décrire maintenant un mode de mise en oeuvre préféré du procédé de l'invention permettant de satisfaire les objectifs, mais en présentant au préalable les difficultés rencontrées.

Pour la fabrication d'insert bas coût, les inventeurs ont sélectionné notamment des antennes filaires par exemple cousues, brodés ou équivalents sur support comprenant des tissus. Différents problèmes techniques rencontrés sont exposés en partie ci-après.

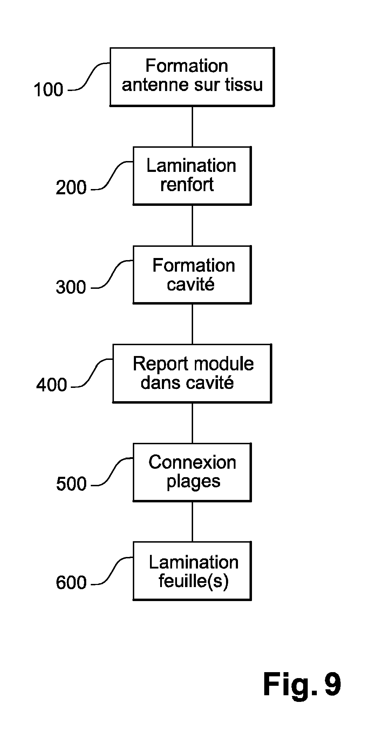

Les inventeurs ont visé de préférence une production sur des substrats pouvant comporter une pluralité d'antennes cousues ou brodées. En particulier, en broderie notamment pour des questions de productivité et facilité de mise en oeuvre, plusieurs antennes sont d'abord réalisées en même temps sur des bancs à broder de préférence sur un support textile, fibreux tel un tissu, tissé, non tissé, ou support accepté par les machines à broder ou à coudre illustré figure 9.

Cependant, ne sont pas exclus d'autres substrats isolants qui peuvent être un cuir synthétique fin ou en matériau apte à être cousu ou brodé notamment en composite fibre ou tissu et feuille polymère.

Pour des questions de discrétion de l'insert, ultérieurement laminé ou ajouté à un objet, mais aussi de productivité et facilité de couture ou broderie, le support est un tissu très fin.

Le substrat peut avoir différentes épaisseurs, généralement inférieures ou égales à celle d'une carte à puce de 0,76 mm de manière le cas échéant à servir d'insert entre deux films ou feuilles ou servir de support à une feuille de couverture et/ou d'impression. Typiquement le substrat peut avoir une épaisseur allant par exemple de 0,05 mm à 0,5 mm.

Toutefois, les inventeurs ont noté une absence de stabilité dimensionnelle ou tenue de certains substrats notamment en tissu convenant à cette production en série notamment lorsqu'ils sont continus et en défilement. Ce manque de tenue rend difficile voire impossible un positionnement précis des modules, microcircuits ou des plages de contact ou des cavités notamment par indexation sur le substrat, avant où après la réalisation des antennes.

L'ajout d'une feuille ou matériau de renfort ou autre tissu au substrat, avec éventuellement des cavités de réception de modules préétablies tel qu'imaginé par les inventeurs, apporterait de la stabilité dimensionnelle au substrat mais présente aussi des inconvénients : du fait du manque de tenue du substrat et indexation difficile, les cavités risquent d'être mal positionnées.

A l'inverse, l'ajout de ce renfort, sans cavité, apporterait de la stabilité dimensionnelle au substrat, mais cela augmenterait la difficulté d'une connexion de pratique et de qualité par ultra-son ou thermo-compression dans la mesure où il n'y aurait pas de cavité pour introduire une puce ou module et rapprocher les plages de contact des portions de connexions de l'antenne et réaliser une bonne soudure.

Les inventeurs ont trouvé que les composants électroniques ou plages de contact doivent être de préférence reportés sur le substrat après réalisation de l'antenne pour des raisons de facilité de couture de l'antenne, cadence de production, et en raison de difficulté du placement du module et connexion du module permettant de réaliser une antenne économique.

En outre, l'antenne peut être gainée d'un isolant notamment pour réaliser un pont isolant croisant les spires ou être associée à des fils ou fibres non conducteurs pour des raisons notamment de solidité, prévention de casse de fil ou de fixation sur le support. Dans ce cas, il peut se produire des souillures, pollution de l'outil de soudure lors de la connexion par soudure ultra son ou thermo compression puisque l'outil de soudure (thermode) étant appliquée sur le fil, il est mis au contact des matériaux polluants entourant le fil d'antenne dans une configuration ou on reporte le module à côté des spires de l'antenne ou en dessous.

En outre, comme l'antenne filaire repose sur le substrat, les inventeurs ont imaginé un report et connexion des plages effectuées par dessus, l'antenne pouvant avoir tendance à enfoncer dans la feuille ou masse fibreuse ajoutée sous l'effet de la pression des moyens de soudure selon la nature des matériaux utilisés.

Ainsi, le procédé de la figure est élaboré comme ci-après.
A l'étape 100, le procédé de réalisation d'un dispositif comportant une antenne de transpondeur radiofréquence, ledit procédé comprenant une étape de réalisation de l'antenne avec deux portions terminales par une technique de couture ou broderie. Plusieurs antennes sont réalisées en même temps comme illustré à la figure 7.

Le fil d'antenne 3, 7, 8 (fig.6) peut comporter au moins un revêtement isolant sur toute sa surface; Il peut aussi cumulativement ou alternativement être au contact de fils isolants 24 par endroits. Le fil d'antenne est fixé sur le substrat à l'aide d'un fil non conducteur 19, dit fil de broderie ou de couture.

De préférence, le fil d'antenne est un fil hybride associé à au moins un fil non conducteur 19 pour permettre notamment une meilleure cadence sans cassure du fil.
Ce fil non conducteur entoure au moins par endroit le fil d'antenne et constitue en quelque sorte un gainage isolant par endroit.
De préférence, le fil non conducteur est thermo fusible ou thermoplastique pour permettre leur retrait ou élimination au niveau de la zone de soudure.

La réalisation de l'antenne en broderie peut comprendre de préférence une étape de réalisation d'un point d'arrêt (non représenté) de fil d'antenne de couture, de broderie, tricotage en bout de l'une au moins des dites portions terminales et une étape d'élimination dudit point d'arrêt comprenant une élimination de matière du support en regard du point d'arrêt et formation éventuelle d'une cavité. Les portions terminales de l'antenne ou points d'arrêt peuvent être superposés ou réalisées dans une zone du support destinée à être éliminée. En cas d'élimination, d'un point d'arrêt par poinçonnage la portion terminale correspondante s'étend jusqu'au bord d'une cavité.

A l'étape 200 Ensuite, selon une caractéristique, le procédé comporte une étape selon laquelle on dispose un matériau de renfort (fig. 7) sous forme de feuille ou couche sur une face du substrat opposée à celle portant les portions terminales. Ce matériau stabilise le manque de tenu du tissu.
La couche ou feuille de renfort est disposée directement après réalisation de l'antenne de manière à ne pas gêner la cadence de production d'antennes.
Le matériau stabilisant dans l'exemple comprend un thermoplastique poreux connu sous la marque Teslin diffusé notamment sous forme de feuille.

L'assemblage peut être réalisé par soudure thermique (fusion des matériaux) ou addition d'un adhésif (en film, liquide) par lamination à chaud ou froid.

Un effet similaire à l'ajout d'une feuille peut être obtenu par imprégnation ou enduction d'une couche ou pulvérisation d'un produit tel un enduit, un apprêt, une résine, une mousse polymère, apte à stabiliser dimensionnellement le substrat.

A l'étape 300, le support étant stabilisé, il est alors possible de le manipuler et d'effectuer des étapes plus classiques, notamment reporter avec plus de facilité des plages de contact sur le substrat.
Cependant, dans un mode préféré (fig. 4) selon une autre caractéristique, on procède à une étape de formation d'une cavité 26 dans le substrat et/ou feuille ou couche de renfort à proximité des portions terminales de connexion de l'antenne de manière à introduire la puce ou module.

La cavité est réalisée par poinçonnage mais, on pourrait envisager un formage par pression ou emboutissage ou autre usinage au moins partiel du substrat.

A l'étape 400, (fig. 8) les plages sont reportées de manière à présenter une surface en regard d'une portion terminale de connexion de l'antenne reposant sur le substrat; Le cas échéant, une puce peut être reportée notamment par puce retournée sur les plages ou sur le substrat ou une plage de contact pour une connexion classique par tout moyen connu, voire même de type à fil soudé.

De préférence, les plages sont déjà connectées à un microcircuit électronique tel une puce; Et le microcircuit est inséré au moins en partie dans la cavité, les plages restant en dehors de la cavité en reposant sur les portions de pistes ou extrémités terminales d'antenne reposant elles-mêmes sur le support comme illustré à la figure 6.

A l'étape 500, (fig. 6) on effectue leur connexion aux portions terminales de l'antenne; La connexion est réalisée sous forme d'une soudure par apport d'énergie entre les plages et les portions terminales, l'énergie de soudure est appliquée directement sur les plages à l'aide d'une thermode pour une soudure de type thermo-compression ou d'une sonde à ultra-son pour une soudure à ultra-son.

Pour la soudure, on utilise de préférence une enclume qui vient exercer un appui contre l'enfoncement de la portion terminale de l'antenne dans le support. L'enclume est d'autant plus recommandée que le fil d'antenne a tendance à s'enfoncer dans le substrat de part la finesse du fil et/ou mollesse du substrat et/ou matériau de renfort.

L'enclume E transperce au moins la feuille ou couche de renfort en regard de la portion terminale à connecter de manière que la portion à connecter soit supportée par l'enclume pendant la soudure. La section de l'enclume rectangulaire peut avoir une section rectangulaire ou carrée par exemple comprise entre 0,3 x 1 mm² à 1 x 5 mm²

A cause de la présence des fils non conducteurs 19 et 24, selon l'invention, on applique l'outil (thermode) (T) sur la plage métallique 16 ce qui a pour effet de faire fondre le fil de fixation et/ou fil associés passant dessous et ce sans pollution de l'outil de soudage.

D'autres connexions sont possibles comme par exemple, un usinage au moins en surface des fils conducteurs au cas où ils seraient gainés de vernis, puis une connexion par colle conductrice.

A l'étape 600, on assemble le support avec au moins une feuille sur le côté opposé à la feuille de renfort. Les feuilles peuvent par exemple être constituées en matériaux utilisés pour les feuilles ou couverture de passeport ou carte à puce ou autre objet. On procédé ensuite à des découpes au format. Le cas échéant, la découpe peut s'effectuer à d'autres étapes.

## Revendications

1. Procédé de réalisation d'un dispositif comportant une antenne de transpondeur radiofréquence, ledit procédé comprenant une étape de réalisation de l'antenne (3) avec deux portions terminales (7, 8) par une technique de couture ou broderie,
**caractérisé en ce qu'**il comprend une étape de fixation d'un matériau stabilisant (15) et renforçant le substrat (2f) après réalisation de l'antenne et avant report d'un module.

2. Procédé selon la revendication précédente, **caractérisé en ce que** le substrat comprend un tissu (2f).

3. Procédé selon la revendication précédente, **caractérisé en ce que** le tissu a une épaisseur comprise entre 80 µm et 300µm au repos et/ou utilise des fils de 48 à 76 dtex.

4. Procédé selon l'une des revendications précédentes, **caractérisé en ce que** le procédé comprend après la réalisation de l'antenne, une étape de formation d'une cavité (26) dans le substrat et feuille ou couche de renfort (15) à proximité des portions terminales (7, 8) de connexion de l'antenne.

5. Procédé selon l'une des revendications précédentes **caractérisé en ce que** le procédé comprend une étape selon laquelle on reporte des plages de contact (5, 6) associées à un microcircuit (20) en regard de portions terminales (7, 8) de l'antenne, le microcircuit étant inséré au moins en partie dans la cavité (26) et on connecte les plages aux plages de contact.

6. Procédé selon l'une des revendications précédentes, **caractérisé en ce que** le matériau stabilisant (15) comprend un matériau thermoplastique tel que polychlorure de vinyle (PVC), polycarbonate (PC), polyesters, polyethylène (PE) chargé silice ou polyuréthane (PU) ou du papier naturel ou papier synthétique.

7. Dispositif comportant une antenne de transpondeur radiofréquence ayant deux portions terminales (7, 8) réalisée par une technique de couture ou broderie, sur un substrat souple (2f),
**caractérisé en ce qu'**il comprend un matériau stabilisant(15) renforçant le substrat et fixé à une face du substrat opposée à celle portant les portions terminales de l'antenne.

8. Dispositif selon la revendication précédente, **caractérisé en** le substrat comprend un tissu (2f).

9. Dispositif selon la revendication précédente, **caractérisé en** le tissu possède une épaisseur comprise entre 80µ et 300µ et/ou des fils de 48 et 76 dtex.

10. Dispositif selon l'une des revendications 7 à 10, **caractérisé en ce qu'**il comprend une cavité (26) dans le substrat et feuille ou couche de renfort à proximité des portions terminales de connexion de l'antenne.

11. Dispositif selon la revendication 10, **caractérisé en ce que** des plages de contact sont associées à un microcircuit (20) et disposées en regard du substrat et de portions terminales de l'antenne reposant sur le substrat, tandis que le microcircuit est inséré au moins en partie dans la cavité (26) et connecté à l'antenne.

12. Produit électronique de communication radiofréquence, tel une carte à puce sans contact, un passeport, comprenant le dispositif selon l'une des revendications 7 à 12.
